# FASCICULE DE BREVET EUROPEEN

(11) **EP 1 548 524 B1**
(45) Date de publication et mention de la délivrance du brevet: **22.08.2007**
(21) Numéro de dépôt: 03405923.8
(22) Date de dépôt: 23.12.2003
(51) Int. Cl.: G04B 37/22, C04B 41/90

(54) **Elément en céramique pour boîte de montre et procédé de fabrication de cet élément**
Keramisches Element für Uhrengehäuse und Verfahren zu seiner Herstellung
Ceramic element for watch case and method of manufacturing the same

(43) Date de publication de la demande: 29.06.2005
(73) Titulaire: Rolex S.A., 1211 Geneve 24 (CH)
(72) Inventeur: Grippo, Eric, 1207 Genève (CH); Passaquin, William, 74200 Armoy (FR)
(74) Mandataire: Savoye, Jean-Paul

(56) Documents cités:
- EP-A- 0 230 853
- EP-A- 0 947 490

## Description

La présente invention se rapporte à un élément en céramique destiné à être rapporté sur une boîte de montre, dont la surface visible comporte des motifs, ainsi qu'à un procédé de fabrication de cet élément.

Il existe de nombreux éléments en forme d'anneau à section aplatie, de préférence à face supérieure tronconique, munis de graduations ou de décors et qui sont montés par clipsage sur la carrure ou sur la lunette de la boîte de montre, notamment sur une lunette tournante. Ces éléments ont à la fois un rôle technique, en relation avec l'indication du temps et décoratif et sont souvent réalisés dans des alliages aisés à décorer, comme l'aluminium, qui permettent d'obtenir différentes couleurs et types de motifs par des techniques de revêtement ou de traitement de surface telle que l'anodisation. Cela permet une grande souplesse dans le choix des couleurs et des motifs, grâce à l'application de plusieurs couches de couleurs différentes combinées avec des techniques de masquage.

L'inconvénient de ces éléments, exposés aux agressions extérieures comme la boîte de montre elle-même, réside dans le fait qu'ils sont en un matériau relativement tendre susceptible de se rayer. En outre, ce matériau peut former, avec certains métaux tel que l'or, un effet pile et provoquer des problèmes de corrosion.

Les motifs en relief sont réalisés par étampage, ce qui rend difficile l'obtention de contrastes de couleurs et de matières ainsi que l'élaboration de graduations sans dépouille, alors que ce sont pourtant des éléments cruciaux d'un point de vue esthétique.

Il a déjà été proposé, notamment par le EP 0'850'900, par le EP 0'947490 et par le JP 09-228050, des éléments de boîtiers de montres en céramique. Les motifs ou décors sont alors obtenus par des dépôts en couches minces et dures qui ont un accrochage suffisant sur le substrat. Ces techniques nécessitent de devoir réaliser des couches dures non métalliques qui ont des couleurs pas exactement identiques aux autres composants de la montre en métaux précieux.

Des creusures ont déjà été ménagées sur des disques ou anneaux plats ou tronconiques de lunettes en céramique à l'aide d'un laser, notamment pour former des motifs. La profondeur de telles creusures est limitée à 0,05 mm. Elle doit être inférieure à 0,05 mm sous peine de fragiliser la pièce et de ne plus pouvoir la clipser sans risque de casse. Par conséquent, les creusures obtenues par laser ne sont pas assez profondes pour pouvoir y braser des motifs sans qu'un cordon de brasure ne ressorte de ces creusures. Les flancs des creusures obtenues par laser ne sont pas perpendiculaires, à la surface dans laquelle elles sont ménagées, mais inclinés vers le centre de la creusure. De plus, ce mode d'usinage provoque des amorces de rupture du disque ou de l'anneau plat, en sorte que celui-ci ne peut plus être fixé par clipsage en raison de sa fragilité, mais doit être collé et ne peut donc pas être fixé de manière amovible. Il n'est par conséquent pas interchangeable.

Un autre problème vient du fait que des anneaux plats de lunettes en céramique ont généralement une forme tronconique. De ce fait, il n'est pas possible, par la technique d'injection des pièces en céramique, de réaliser les creusures dont les flancs sont perpendiculaires à la surface visible tronconique, étant donné qu'on ne pourrait plus les démouler.

On a par ailleurs proposé dans le CH 322'541, de protéger des éléments décoratifs métalliques vus en transparence à travers un saphir par exemple. Les alliages employés peuvent dès lors être de même type que ceux d'autres parties de la montre. Ces éléments décoratifs vus en transparence présentent toutefois un aspect différent de ce que l'on pourrait obtenir avec des motifs présents en surface. De plus, l'emploi d'une céramique transparente comme le saphir est peu favorable au montage par clipsage, compte tenu de la grande rigidité de ce matériau.

Il a déjà été proposé dans le DE 2'533'524 et dans le EP 0'230'853 un procédé pour déposer une couche métallisée sur un substrat en céramique qui consiste à déposer sous vide une première couche réactive de CuO ou de Ti d'au moins 100 nm suivie d'une seconde couche de cuivre, d'argent, d'or ou de nickel d'au moins 100 nm, déposée sous vide, épaissie par un revêtement chimique ou électrochimique jusqu'à une épaisseur de 0,004 à 0,020 mm. L'adhésion entre les deux couches est obtenue par passage au four. Dans le cas du cuivre et du CuO, la température du four doit se situer entre le point eutectique du CuO et le point de fusion du cuivre soit entre 1068° et 1078°C. Après ce traitement, la couche déposée est prête pour le soudage.

Un tel procédé est donc relativement complexe dans la mesure où il nécessite des opérations de dépôt sous vide, de dépôt chimique ou électrochimique et de traitement thermique, avant celle de soudage. Il nécessite également un chauffage à une température élevée pour obtenir l'adhésion entre les deux couches.

Le but de la présente invention est de remédier, au moins en partie, aux inconvénients susmentionnés.

A cet effet, cette invention a tout d'abord pour objet un élément en céramique destiné à être rapporté sur une boîte de montre, dont la surface visible présente des motifs selon la revendication 1. Elle a également pour objet un procédé de fabrication d'un élément en céramique selon la revendication 10.

L'élément en céramique objet de la présente invention offre plusieurs possibilités, généralement inédites sur des anneaux destinés, de préférence, à être rapportés par clipsage sur des lunettes tournantes. C'est ainsi que grâce à cette invention, les motifs peuvent apparaître en creux par rapport à la surface visible de cet élément en céramique. Au contraire, ces motifs peuvent être formés par des motifs en relief par rapport à cette surface visible. Ces motifs peuvent être soudés sans que des cordons de brasure n'apparaissent autour de leurs bases, celles-ci étant dissimulées par les creusures ménagées à une profondeur suffisante au-dessous de la surface visible.

Grâce au procédé selon l'invention, les creusures destinées à recevoir les motifs peuvent être réalisées à la profondeur désirée, même si la surface dans laquelle elles sont ménagées est conique ou pyramidale, comme c'est généralement le cas.

Le procédé de dépôt sous vide utilisant la pulvérisation magnétron permet d'obtenir un excellent accrochage des couches déposées. Etant donné que la première couche d'accrochage est très réactive, le dépôt de la seconde couche du groupe Au, Ag, CrN, Ni, Pt, TiN, ZrN, Pd ou leurs alliages dans la même enceinte et sans remise à l'atmosphère assure sa protection. Il est à noter que la pulvérisation magnétron permet également de travailler à basse température, très inférieure à 100°C, en sorte qu'il serait possible de déposer un masque en un polymère photosensible avant l'opération de revêtement sous vide. Toutefois, compte tenu de la présence des creusures, on préférera faire un dépôt sur l'ensemble de la face visible de l'anneau tronconique et d'enlever ensuite la couche de la surface tronconique par abrasion, pour ne laisser subsister les couches déposées que dans les creusures.

D'autres propriétés et avantages de la présente invention apparaîtront au cours de la description qui va suivre et qui sera faite à l'aide des dessins annexés qui illustrent, schématiquement et à titre d'exemple, un mode de mise en oeuvre et une variante du procédé, objet de la présente invention.
Les figures 1 à 5 illustrent les différentes étapes du procédé de fabrication d'un élément en céramique vu en coupe, destiné à être rapporté sur une boîte de montre, objet de la présente invention;
La figure 6 illustre une variante de la mise en oeuvre des figures 1 à 5;
la figure 7 est une vue partielle d'une coupe diamétrale d'un anneau en céramique pour lunette de montre selon la présente invention;
la figure 8 est une vue partielle d'une coupe diamétrale d'une autre forme d'exécution de la figure 7.

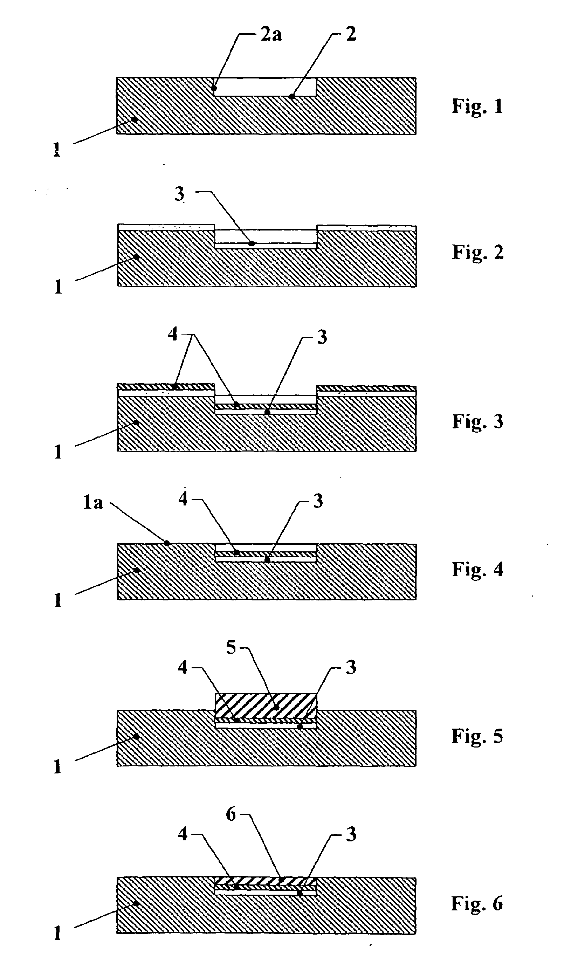

La figure 1 illustre un substrat fritté 1 en ZrO₂ Al₂O₃ ou mélange des deux, dans lequel une creusure 2 à été ménagée par une opération mécanique d'enlèvement de matière avant le frittage du substrat. Une telle opération permet d'obtenir une creusure 2 dont les flancs 2a sont essentiellement perpendiculaires à la surface visible 1a du substrat 1.

Après frittage, ce substrat est mis dans une enceinte de dépôt sous vide dans laquelle une première couche d'accrochage 3 est déposée par la technique de dépôt physique en phase vapeur (PVD) avec pulvérisation cathodique magnétron, qui permet d'assurer une adhésion de la couche d'accrochage 3, supérieure à celle que l'on obtiendrait en utilisant la technique PVD sans magnétron. En outre, grâce à la pulvérisation cathodique magnétron, la température du substrat 1 peut être maintenue basse, bien en dessous de 100°C pendant l'opération de dépôt.

Tout en maintenant le vide dans l'enceinte de dépôt, on forme une seconde couche 4 par pulvérisation cathodique magnétron en utilisant une cible du type Au, Ag, Pt, Pd, TiN, CrN, Ni. L'épaisseur de cette seconde couche est d'au moins 500 nm, de préférence, comprise entre 500 nm et 15 µm.

Suite au dépôt de cette seconde couche 4, on sort le substrat de l'enceinte de dépôt et on débarrasse la surface visible 1a des couches 3 et 4 par abrasion (par polissage ou par diamantage) pour remettre à nu la céramique du substrat 1 et lui donner l'état de surface désiré, en sorte que les couches déposées 3, 4 ne subsistent plus qu'à l'intérieur des creusures 2.

L'opération finale consiste alors à déposer de la pâte à braser au fond de la creusure 2 et d'y braser un motif 5 dont la forme et les dimensions de l'assise correspondent à celles de la creusure 2 (figure 5). La creusure est suffisamment profonde pour que le cordon de brasure, après la fixation de ce motif, reste dans la creusure 2 et ne soit pas visible. En pratique, pour obtenir ce résultat, la profondeur minimum de la creusure 2, avant dépôt des couches d'adhésion, est de 0,08 mm. La profondeur maximum est essentiellement fonction de l'épaisseur du substrat 1, plus il est épais, plus la profondeur peut être grande. Cependant, il n'est généralement pas nécessaire de dépasser une profondeur de 0,20 mm.

Dans une variante de ce procédé, illustrée par la figure 6, après le dépôt de la seconde couche 4, on passe à l'opération illustrée par la figure 6, qui consiste à remplir la creusure 2 d'un métal noble ou d'un alliage de métal noble 6 par électroformage, suivi d'un polissage qui élimine les couches 3, 4 et 6 de la surface 1a du substrat 1.

L'équipement utilisé pour effectuer le dépôt sous vide par pulvérisation cathodique au magnétron comprend:
- une enceinte cylindrique en acier inoxydable avec système de pompage turbomoléculaire et pompe rotative à palettes;
- un porte-substrat de type carrousel à axe de rotation vertical et substrats positionnés verticalement. Possibilité de réaliser une pulvérisation cathodique RF polarisée sur le porte-substrat;
- deux cathodes magnétrons rectangulaires verticales montées face au carrousel selon un angle de 120° par rapport à l'axe du carrousel;
- deux cathodes:
   une cible Ti_{99,99}
   une cible Au_{99,99}
- une alimentation des cathodes par un générateur RF 13,56 MHz de 600 W avec une boîte d'accord d'impédance manuel;
- une alimentation en gaz (pureté: 5,7-6,0) par débitmètre de masse;
- un contrôle de pression par jauge Penning pour le contrôle du vide limite et par jauge capacitive (mesure absolue) pour le contrôle de la pression de travail.

Les pièces ont été nettoyées dans un bain aux ultrasons dans un mélange de 20% d'alcool isopropylique et de 80% d'eau déionisée, pendant cinq minutes. Séchage au pistolet à azote.

Les substrats sont décapés par mise sous vide de l'enceinte et pompage jusqu'à une pression inférieure à 5 x 10⁻² Pa. Un nettoyage ionique de la surface des substrats est exécuté par pulvérisation inversée:
- puissance RF sur porte-substrat:> 100W
- flux d'argon:> 15 cm³/min
- flux d'oxygène:> 5 cm³/min
- pression totale:< 5 Pa
- durée: 20-30 min

Les conditions de dépôt de la sous-couche de titane sont les suivantes:
- puissante RF sur la cathode:> 150 W
- flux d'argon:> 5 cm³/min
- pression d'argon:< 5 Pa
- l'épaisseur de la couche est >100 nm, de préférence, >100 nm et <1500 nm

Tout en maintenant le vide dans l'enceinte, les substrats sont déplacés par rotation du carrousel vers une petite cathode équipée de la cible Au_{99,99}. Les conditions du dépôt sont les suivantes:
- puissance RF sur la cathode:> 50 W
- flux d'argon:> 10 cm³/min
- pression d'argon:< 5 Pa
- l'épaisseur de la couche est d'au moins >100 nm, de préférence, >100 nm et <15 µm.

Les substrats ainsi obtenus sont entièrement recouverts de la couche d'accrochage 3 en titane recouverte de la couche d'or 4, comme illustré par la figure 3.

Afin de conserver les dépôts uniquement dans les creusures, on soumet la surface 1a du substrat 1 à une opération mécanique d'enlèvement de matière, par exemple de polissage ou diamantage avec un lapidaire standard, pour obtenir un substrat 1 tel qu'illustré par la figure 4.

Selon la première variante, on soude des motifs en or dont la forme et les dimensions correspondent à celles des creusures 2 du substrat 1. Bien que le substrat illustré ne comporte qu'une creusure, il est bien évident qu'il comporte en réalité, de préférence, plusieurs creusures.

On dépose de la pâte à braser composée d'un alliage d'or (Au/Sn) dans le fond des creusures 2 à l'aide d'une seringue. Les différents motifs sont positionnés dans les creusures de formes correspondantes puis sont brasés par passage dans un four à bande standard sous atmosphère d'hydrogène contrôlée.

La vitesse de passage des substrats dans le four est supérieure à 10 cm/min. La température du four est de 400°C. On obtient alors, après polissage, un élément en céramique avec des motifs brasés en relief, comme illustré par la figure 5.

Selon la seconde variante illustrée par la figure 6, on pourrait aussi remplir les creusures d'or ou d'un autre métal ou alliage de métal noble par la technique d'électroformage. Le bain d'or utilisé dans ce cas est à forte teneur en Au et permet un électroformage de quelque dixièmes de millimètres d'épaisseur. Les conditions opératoires du processus d'électroformage sont celles indiquées par les fournisseurs de bains d'électroformage.

Suite au dépôt réalisé par électroformage, les substrats subissent un polissage ou un diamantage avec un lapidaire standard afin d'enlever les surplus de matière et d'obtenir un disque avec des creusures remplies d'or à surface polie, affleurant la surface visible 1a de l'élément en céramique 1, comme illustré par la figure 6.

Selon une autre variante, les signes ou décors pourraient se situer au-dessous du niveau de la surface 1a du substrat. Dans ce cas, ils pourraient alors être directement constitués par la seconde couche 3, comme illustré par la figure 4, formée d'un des éléments de revêtement susmentionnés utilisé pour cette seconde couche 3. Dans ce cas, l'état de surface du motif en fond de creusure est celui du dépôt, c'est-à-dire mat.

Dans les exemples illustrés, le substrat 1 représenté en coupe par les figures 1 à 6 correspond en réalité à une portion de l'élément en céramique objet de la présente invention. Cette portion peut correspondre notamment à une section radiale de cet élément en céramique constitué par un anneau circulaire de section aplatie. De préférence, cet anneau a une forme tronconique, de sorte que la surface visible 1a est inclinée par rapport à l'axe de révolution de cet anneau.

En variante, au lieu d'être en forme d'anneau tronconique, l'élément en céramique objet de la présente invention pourrait être en forme de cadre polygonal à faces inclinées par rapport à l'axe central de cet élément et constituer ainsi un tronc de pyramide.

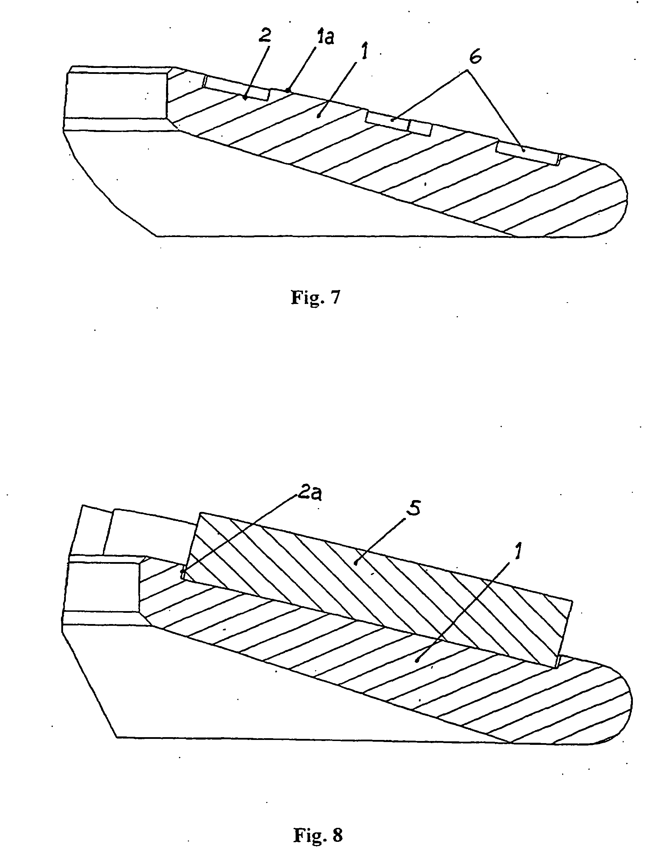

La figure 7 illustre une portion d'un anneau tronconique en céramique 1, destiné à être rapporté par déformation élastique sur une lunette de boîte de montre (non représentée), dans lequel la ou les creusures 2 sont remplies en totalité, comme illustré par la figure 6 ou partiellement, comme dans la forme d'exécution de la figure 4.

La figure 8 illustre une portion d'un anneau tronconique en céramique 1 destiné à être rapporté par déformation élastique sur une lunette de boîte de montre (non représentée), comportant des motifs 5 en relief, comme dans la forme d'exécution de la figure 5.

## Revendications

1. Elément en céramique destiné à être rapporté sur une boîte de montre, dont la surface visible comporte des motifs, **caractérisé en ce que** ladite surface visible (1a) présente, à l'endroit de chaque motif une creusure (2) de la forme de l'assise dudit motif, d'une profondeur au moins égale à 0,05 mm et dont les flancs (2a) sont essentiellement perpendiculaires à ladite surface visible, le fond desdites creusures (2) présentant une première couche d'accrochage (3) d'au moins 100 nm et au moins une seconde couche du groupe Au, Ag, CrN, Ni, Pt, TiN, ZrN, Pd ou leurs alliages d'au moins 100 nm d'épaisseur.

2. Elément en céramique selon la revendication 1 dont la forme est circulaire avec la face (1a) formant ladite surface visible, de forme tronconique.

3. Elément en céramique selon la revendication 1 dont la forme est celle d'un cadre polygonal, avec la face formant ladite surface visible présentant la forme d'un tronc de pyramide.

4. Elément en céramique selon l'une des revendications précédentes, dans lequel lesdits motifs (5) sont rapportés par brasage sur la seconde (4) desdites couches et que les assises respectives desdits motifs correspondent à la forme desdites creusures respectives, leurs hauteurs étant supérieures aux profondeurs desdites creusures.

5. Elément en céramique selon l'une des revendications 1 à 3, dans lequel lesdits motifs sont formés par ladite seconde couche.

6. Elément en céramique selon la revendication 5, dans lequel la surface desdits motifs est située au-dessous de ladite surface visible.

7. Elément en céramique selon l'une des revendications précédentes, dans lequel ladite céramique est du ZrO₂, de l'Al₂O₃ ou un mélange des deux.

8. Elément en céramique selon l'une des revendications précédentes, présentant la forme d'un anneau de section radiale essentiellement rectangulaire, destiné à être rapporté de manière amovible par déformation élastique sur une lunette.

9. Elément en céramique selon l'une des revendications précédentes, dans lequel ladite première couche d'accrochage est de type Ti, Ta, Cr ou Th.

10. Procédé de fabrication d'un élément en céramique selon l'une des revendications précédentes, **caractérisé en ce qu'**on réalise lesdites creusures par une opération d'enlèvement mécanique de matière, avant frittage dudit élément en céramique, on dépose sous vide, après frittage, ladite première couche de-type Ti, Ta, Cr, ou Th par une opération de dépôt physique en phase vapeur (PVD) avec pulvérisation cathodique au magnétron suivie, sans mise à l'air, d'un dépôt PVD de ladite seconde couche de Au, Pt, Ag, Cr, Pd, TiN, CrN, ZrN, Ni.

11. Procédé selon la revendication 10 selon lequel on recouvre l'ensemble de la face visible dudit élément en céramique présentant lesdites creusures par lesdites couches et on élimine ensuite ces couches de ladite face visible par abrasion, pour ne laisser lesdites couches que dans lesdites creusures.

12. Procédé selon la revendication 11, selon lequel on dépose une troisième couche de Au, Pt, Ag, Cr, Pd ou leurs alliages par électrodéposition et on soumet ensuite ladite surface visible à une opération mécanique d'enlèvement de matière jusqu'à ce que cette troisième couche soit éliminée de ladite surface visible.

13. Procédé selon l'une des revendications 10 et 11, selon lequel on dépose de la brasure dans lesdites creusures (2) et on brase des motifs (5) dans ces creusures.

## Claims

1. A ceramic element intended to be fitted onto a watch case, the visible surface of which includes features, wherein said visible surface (1a) has, at each feature, a hollow (2) having the shape of the base of said feature, with a depth of at least 0.05 mm, the side walls (2a) of the hollow being essentially perpendicular to said visible surface, the bottom of said hollows (2) having a first tie layer (3) at least 100 nm in thickness and at least one second layer from the group Au, Ag, CrN, Ni, Pt, TiN, ZrN, Pd or alloys thereof, with a thickness of at least 100 nm.

2. The ceramic element as claimed in claim 1, the shape of which is circular with the face (1a) forming said visible surface of frustoconical shape.

3. The ceramic element as claimed in claim 1, the shape of which is that of a polygonal frame, with the face forming said visible surface having the shape of a truncated pyramid.

4. The ceramic element as claimed in one of the preceding claims, in which said features (5) are fitted onto the second (4) of said layers by brazing and the respective bases of said features correspond to the shape of said respective hollows, their heights being greater than the depths of said hollows.

5. The ceramic element as claimed in one of claims 1 to 3, in which said features are formed by said second layer.

6. The ceramic element as claimed in claim 5, in which the surface of said features lies below said visible surface.

7. The ceramic element as claimed in one of the preceding claims, in which said ceramic is ZrO₂, Al₂O₃ or a mixture of the two.

8. The ceramic element as claimed in one of the preceding claims, which has the shape of a ring of essentially rectangular radial cross section, intended to be removably fitted onto a bezel by elastic deformation.

9. The ceramic element as claimed in one of the preceding claims, in which said first, tie layer is of Ti, Ta, Cr or Th type.

10. A process for manufacturing a ceramic element as claimed in one of the preceding claims, wherein said hollows are produced by an operation of mechanically removing material, before said ceramic element is sintered, said first layer of Ti, Ta, Cr or Th type is vacuum deposited, after sintering, by a physical vapor deposition (PVD) operation with magnetron sputtering followed, without venting to atmosphere, by PVD deposition of said Au, Pt, Ag, Cr, Pd, TiN, CrN, ZrN or Ni second layer.

11. The process as claimed in claim 10, in which the entire visible face of said ceramic element having said hollows is covered by said layers and then these layers are removed from said visible face by abrasion, in order to leave said layers only in said hollows.

12. The process as claimed in claim 11, in which a third layer, made of Au, Pt, Ag, Cr, Pd or alloys thereof, is deposited by electrodeposition and then said visible surface is subjected to a mechanical operation of material removal until this third layer has been removed from said visible surface.

13. The process as claimed in either of claims 10 and 11, in which some braze is deposited in said hollows (2) and features (5) are brazed in these hollows.

## Patentansprüche

1. Keramisches Element, das dafür bestimmt ist, auf ein Uhrengehäuse aufgesetzt zu werden und dessen sichtbare Oberfläche Muster aufweist, **dadurch gekennzeichnet, dass** die sichtbare Oberfläche (1a) am Ort jedes Musters eine Vertiefung (2) in Gestalt der Basis des Musters von einer Tiefe von wenigstens 0,05 mm aufweist, deren Flanken (2a) im Wesentlichen senkrecht zu der sichtbaren Oberfläche sind, wobei der Boden der Vertiefungen (2) eine erste Haftschicht (3) von wenigstens 100 nm und zumindest eine zweite Schicht der Gruppe von Au, Ag, CrN, Ni, Pt, TiN, ZrN, Pd oder deren Legierungen von wenigstens 100 nm Dicke aufweist.

2. Keramisches Element nach Anspruch 1, das kreisförmig ist, wobei die kegelstumpfförmige Oberseite (1a) die sichtbare Oberfläche bildet.

3. Keramisches Element nach Anspruch 1, das die Gestalt eines mehreckigen Rahmens hat, wobei die Oberseite, die die sichtbare Oberfläche bildet, die Gestalt eines Pyramidenstumpfes aufweist.

4. Keramisches Element nach einem der vorangehenden Ansprüche, bei dem die Muster (5) auf die zweite (4) der Schichten aufgelötet sind und die Basisflächen der Muster in ihrer Gestalt den jeweiligen Vertiefungen entsprechen, wobei ihre Höhen die Tiefe der Vertiefungen übertreffen.

5. Keramisches Element nach einem der Ansprüche 1 bis 3, bei dem die Muster durch die zweite Schicht gebildet werden.

6. Keramisches Element nach Anspruch 5, bei dem die Oberfläche der Muster tiefer als die sichtbare Oberfläche liegt.

7. Keramisches Element nach einem der vorangehenden Ansprüche, bei dem der keramische Werkstoff ZrO₂, Al₂O₃ oder eine Mischung der beiden ist.

8. Keramisches Element nach einem der vorangehenden Ansprüche, das die Gestalt eines Ringes von im Wesentlichen rechtwinkligem Radialschnitt aufweist und dafür bestimmt ist, durch elastische Verformung abnehmbar auf eine Lünette aufgesetzt zu werden.

9. Keramisches Element nach einem der vorangehenden Ansprüche, bei dem die erste Haftschicht vom Typ Ti, Ta, Cr oder Th ist.

10. Herstellungsverfahren für ein keramisches Element nach einem der vorangehenden Ansprüche, **dadurch gekennzeichnet, dass** die Vertiefungen durch einen Arbeitsschritt der mechanischen Abnahme von Material vor dem Sintern des keramischen Elements realisiert werden, dass nach dem Sintern die erste Schicht vom Typ Ti, Ta, Cr oder Th durch einen Arbeitsschritt des physikalischen Aufdampfens (PVD) mit Magnetron-Kathodenzerstäubung abgeschieden und danach ohne Luftzutritt die zweite Schicht von Au, Pt, Ag, Cr, Pd, TiN, CrN, ZrN, Ni durch PVD abgeschieden wird.

11. Verfahren nach Anspruch 10, wonach die gesamte sichtbare Oberfläche des die Vertiefungen aufweisenden keramischen Elements mit den Schichten überzogen und diese Schichten dann durch Abschleifen so von der sichtbaren Oberfläche entfernt werden, dass diese Schichten nur in den Vertiefungen verbleiben.

12. Verfahren nach Anspruch 11, wonach eine dritte Schicht aus Au, Pt, Ag, Cr, Pd oder ihren Legierungen elektrochemisch abgeschieden und dann die sichtbare Oberfläche einem mechanischen Arbeitsschritt unterworfen wird, bei dem Material weggenommen wird, bis diese dritte Schicht von der sichtbaren Oberfläche entfernt worden ist.

13. Verfahren nach einem der Ansprüche 10 und 11, wonach das Hartlot in den Vertiefungen (2) abgeschieden und die Muster (5) in diese Vertiefungen eingelötet werden.
